**Europäisches Patentamt**

**European Patent Office**

**Office européen des brevets**

(19)

(11) Publication number: **0 267 701**
**A1**

(12) # EUROPEAN PATENT APPLICATION

(21) Application number: **87309222.5**

(22) Date of filing: **19.10.87**

(51) Int. Cl.4: **G01F 1/00 , G01F 13/00**

(30) Priority: **17.10.86 US 920199**

(43) Date of publication of application:
**18.05.88 Bulletin 88/20**

(84) Designated Contracting States:
**DE FR GB IT**

(71) Applicant: **Secor, Alan**
**5 Foxglen**
**Irvine California 82714(US)**

Applicant: **Grasty, James S.**
**3330 S. Towner Street**
**Santa Ana California 92707(US)**

Applicant: **Vanyek, Gary E.**
**6941 Dresden Circle**
**Huntingdon Beach California 92647(US)**

Applicant: **Emerson, Douglas L.**
**1304 Cadena**
**San Clemente California 92672(US)**

(72) Inventor: **Secor, Alan**
**5 Foxglen**
**Irvine California 82714(US)**
Inventor: **Grasty, James S.**
**3330 S. Towner Street**
**Santa Ana California 92707(US)**
Inventor: **Vanyek, Gary E.**
**6941 Dresden Circle**
**Huntingdon Beach California 92647(US)**
Inventor: **Emerson, Douglas L.**
**1304 Cadena**
**San Clemente California 92672(US)**

(74) Representative: **Smith, Philip Antony et al**
**REDDIE & GROSE 16 Theobalds Road**
**London WC1X 8PL(GB)**

(54) **Flow controller.**

(57) A liquid-flow controller designed to be interposed in a fluid-carrying conduit contains an on/off valve (34) with a spring loaded latch (123) that is set manually and released by a trip solenoid (122). To monitor the volume of liquid passing through the conduit the flow controller uses an impeller assembly with an impeller (52) which contains a magnet (62) mounted on the axis of the impeller to give a low moment of inertia and high magnetic flux variation to operate an induction reed switch connected to a microprocessor.

The microprocessor may be set to close the valve (34) after a preset volume of liquid has passed through the conduit: this valve will automatically be closed if the supply battery power falls below a preset level.

FIG.3

1a.

# FLOW CONTROLLER

## Field of the Invention

This invention relates to liquid flow controller adapted for use with a consumable process element such as a filter that is designed to be discarded after processing a given volume of liquid. More particularly, the invention relates to a novel combination of flowmeter, microcomputer and display coupled to a shut-off valve to stop the flow through the consumable element at the end of its design life. The invention also includes an improved impeller sensor for flowmeters, a programmable microprocessor controller and LCD display, and a spring actuated shut-off valve responsive to the microprocessor controller. The invention also provides for a display of low battery condition and for operation of the shut-off valve before battery failure.

## Background of the Invention

In general, there is a need for a device combining the elements of a flow meter operating a controller and display for measuring accumulated flow and rate through or from a consumable element and which positively shuts down and closes off the flow at the end of the element's life. In order to provide such a device further improvement in flowmeter construction, magnetic sensors, controllers and failsafe bettery operation are required. In existing flowmeters with magnetic sensors, of which U.S. Patent No. 4,489,616 may be taken as an example, the magnetic elements are so disposed as to create mechanical asymmetries and imbalance or an excessive moment of inertia which has resulted in loss of linearity at low flow rates, or has required impeller constructions employing spindle supports and bearings as in U.S. Patent No. 4,253,341. While there has existed a flowmeter combined with a turn-off valve as in U.S. Patent No. 4,337,655, the meter had to be read by the user and the valve manually closed at the appropriate reading in a totally nonautomatic operation. These prior art devices did not provide the capability by which an automatic and accurate mechanism operated to positively close the valve at the end of the design life of the associated consumable element, nor has there has existed a compact battery operated meter and valve so operated for use in the home, particularly in association with water filters. To be of maximum utility a number of features should be incorporated in such an apparatus as will be described which have been heretofore unavailable.

There is, therefore, a need for a new apparatus for controlling a measured consumption of liquid, as from a water filter, and then automatically closing the output to prevent further use.

In general, the controller of the present invention employs an impeller flowmeter with magnetic induction pickup connected through an anti-siphon valve to a shut-off ball at its output. A battery powered microcomputer with LCD display driver counts impeller turn pulses through a magnetic induction pickup when liquid flow turns the impeller. A solenoid is controlled by the microprocessor to trip a release latch when the valve is to be closed. Upon tripping, a torsion spring rotates the ball valve to the closed position. Upon manually opening the valve the user winds the torsion spring until a projection on the valve knob catches the sets the release latch. This action stores sufficient potential energy in the spring to effect the next valve closure. This design approach uses principally a user powered spring rather than batteries for the significant amount of energy required for valve closure.

The microcomputer is programmed to operate associated circuitry to put the controller in low power drain standby mode when there is no liquid flow, and to trigger the solenoid to shut the flow off with the shut-off valve whenever either the predetermined capacity of a consumable element in the flow line is reached, or, whenever the remaining battery power is about to fall below a value sufficient to energize the solenoid.

Internally, the microcomputer is programmed to present either consumption, capacity or flow rate displays on the LCD, at the user's selection, and to present battery low or shut off displays as appropriate.

A novel impeller and magnet design provides for magnetic configuration and mounting symmetry and low moment of inertia resulting in improved linearity at low flow rates and lower manufacturing costs.

These and other features and objects will become apparent from the following detailed description when taken with the accompanying drawings, of which:

## Brief Description of the Drawings

Figure 1 is a schematic view of the flow controller of the present invention installed in a typical drinking water filter system.

Figure 2 is a perspective view of the flow controller of Figure 1 constructed in accordance with the present invention.

Figure 2a is a cross sectional view of Fig. 2 taken along the lines 2a-2a thereof.

Figure 3 is a sectional view of Figure 2 taken along the lines of 3-3 thereof.

Figure 4 is a perspective view of the flow controller of Figure 2 showing the cover opened with certain parts removed for clarity.

Figure 5 is an exploded view of the flow controller of Figure 2 showing the lower housing, upper housing and contained parts of the left portion of the apparatus illustrated in Figure 4.

Figure 6 is a detailed cross sectional view, partially broken away, of the on-off switch spring loaded valve and release solenoid of the flow controller of Figure 2 showing the same released (off).

Figure 6a is a view similar to Figure 6 showing the valve latched in the on position.

Figure 7 is an elevational view of the impeller of the flow controller of Figures 2 through 6.

Figure 8 is a cross sectional view taken along the lines 8-8 of Figure 7.

Figure 9 is a schematic diagram of the controller circuit the apparatus of Figures 2 through 8.

Figure 10 is a schematic diagram of the regulated power supply circuit of the controller portion of the flow controller of Figures 2 through 9.

Figure 11 is a flow sheet showing the transitions between the various user selectable display modes available in the apparatus of Figure 2.

Figure 11a shows examples of the actual displays for the modes of Figure 11 as well as those for low battery and shut-off.

## Detailed Description of the Preferred Embodiments

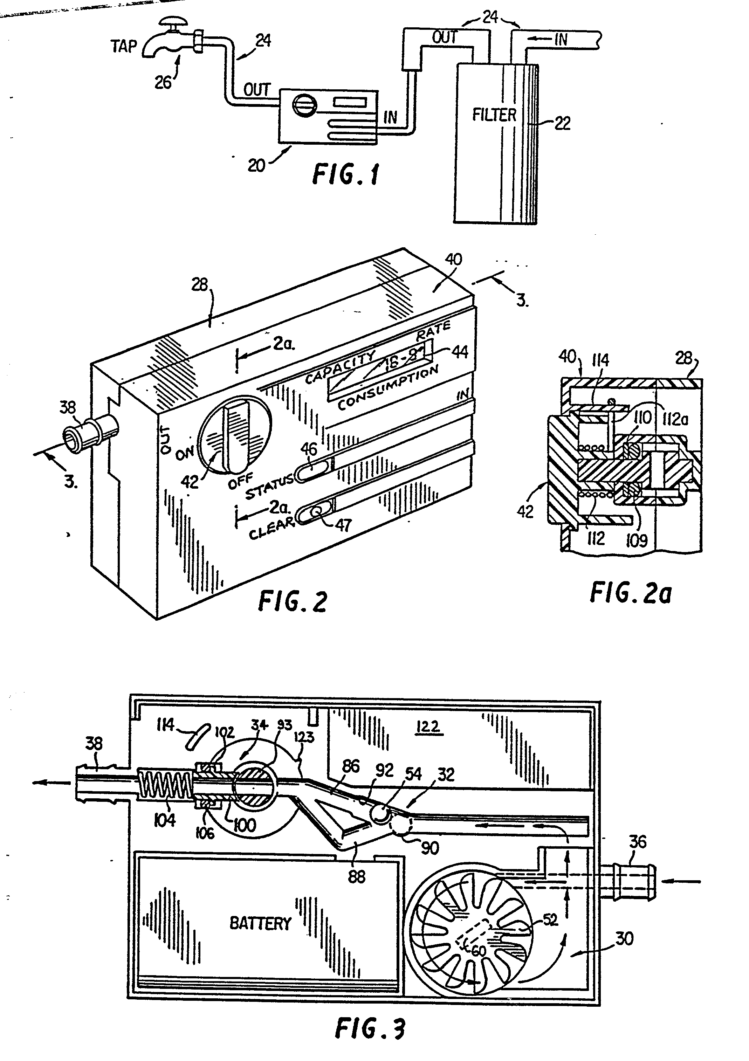

Referring generally to Figures 1 through 4, the liquid flow controller 20 of the present invention is designed to be installed in series with a consumable liquid process element such as a water purity filter 22 in a water line 24 connected to a tap 26. The controller 20 includes a back case or housing 28 in which are mounted an impeller type flow meter 30, an anti-siphon valve 32, and an outlet on/off valve 34 connected in series from the inlet fitting 36 to the outlet fitting 38. As shown in Figure 2, a front cover 40 is provided through which protrudes an on-off knob 42, and openings for an LCD readout 44, a status button 46 and a clear button 48.,

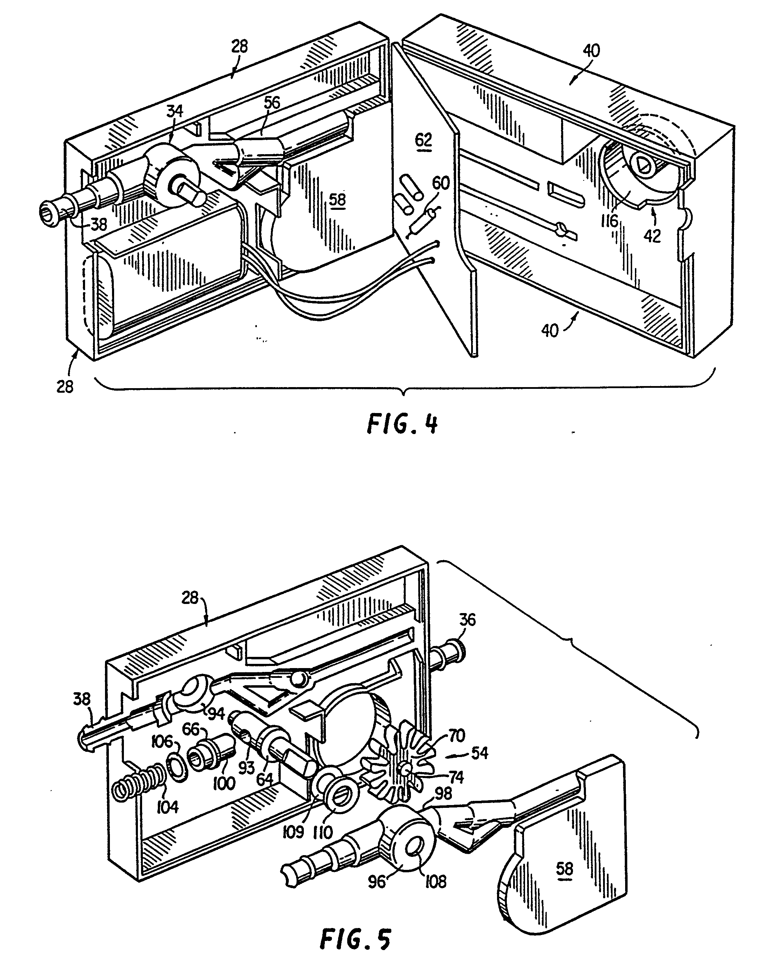

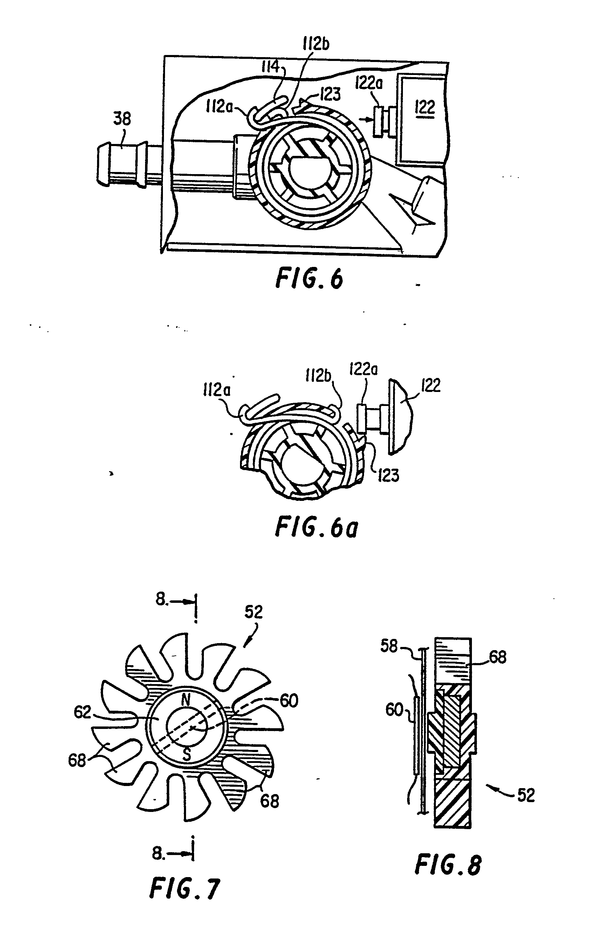

As shown best in Figure 5, the case 28 has formed therein a recess 50 forming an impeller meter well of cylindrical shape which a impeller 52 rests, unsupported, with small clearances on all sides. When the anti-siphon ball 54 and the parts of the valve 34 are installed, a sealed water passage channel is completed through the controller 20 by ultrasonically welding an upper housing or cap 56 to the case. The cap includes a plate 58 forming the upper part of the impeller housing as shown in Figure 4, over which magnetic induction reed switch 60 is carried on the back of an electronic circuit board 62 which, when mounted to the cover 40 and closed, is brought into the immediate proximity of the impeller hub on the opposite side of plate 58 from the impeller.

The impeller 52 and the valve steam 64 and seat 66 are formed out of a molded plastic, preferably made of Delrin or of nylon. The back case 28, upper housing 56, and cover 40 are preferably made of ABS plastic with respect to which both Delrin and nylon have a low coefficient of friction so that the impeller 52 and valve 34 parts are easily rotated while in surface contact with the case and upper housing.

The impeller is molded with a plurality of shaped blades 68 supported on a hub 70. Cylindrical recess 72 is formed to extend part way through hub 70 and in axial alignment with the hub and impeller blades all of which are axially symmetric about a single axis 74 extending at right angles to the impeller through its middle and on which recess 72 and disk magnet 62 are aligned. The impeller is of improved design, carrying a magnet 62 in the form of a disk (Figures 7 and 8) having north, south poles on opposite sides of a diameter, significantly smaller than the impeller as shown. The magnet 62 is formed in the shape of a flat circular plug or disk which snugly fits into the recess 72, into which is sealed by a cap 76. Cap 76 and the backside of the impeller are both provided with circular raised sections serving as hub bearings 78, 80 in near contact with the case and housing walls. A clearance of about 0.010" is found suitable for suspending the impeller for rotation in the water vortex that flows through the flow meter section. The flow is shown by the arrows in Figures 3, from the inlet 36 through a conduit in the case emerging tangentially at 82 (Fig. 5) and then around the impeller to exit through a ramp to a cross feed tube 84 leading to anti-siphon valve 54.

The anti-siphon valve 54 uses parallel conduits 86, 88, of different diameters, the larger one 88 housing the ball 54 bounded at the inlet by seat 90 and at the outlet by seat 92 and thereby selectively operated to open and close the valve against back flow, as during a pressure drop, which reverse flow pushes the ball (due to its larger cross sectional area) against seat 90. During normal flow the ball rests against seat 92. Gravity causes the ball to rest against seat 90 when there is no flow. The construction of valve 34 is of the ball valve type employing a cylindrical valve stem 93 which rotates in the housing molded from the case 28 at 94 and cap 56 at 96 to forms a cylindrical chamber open at the inlet side to the outlet of the anti-siphon valve 34 and ported through a valve seat 100 to outlet 38. Seat 100 is urged into the stem by compression spring 104, the seat being sealed by a radially compressed O-ring 106.

The stem 93 extends outwardly from the valve body through a hole in 108 the upper housing and terminates in an extension with a float to which is mounted the on-off knob 42. The upper part of the stem is sealed with an O-ring 109 and anti-friction washer 110.

Referring to Figures 2a, 6, and 6a, there is shown cross sectional views in greater detail of the spring operated release latch closing mechanism and trip solenoid latch for valve 34. The inside part 111 of the hub 42 is wound with a helical spring 112 in torsion, one end 112a of the spring being coupled exteriorly to a post 114 and the other end 112b interiorly engaging an inner rim 116 of the knob so that the spring is wound as the knob is rotated by the user from "off" to "on" positions (compare Fig. 6a to Fig. 6). As the knob is rotated to "on," a projection ledge 118 on the outer face of the inner rim 116 passes up and is engaged by the normally extending spring loaded plunger 120 of an electrically controllable solenoid 122. The plunger 120 is shown as withdrawn in Figure 6 against its internal spring by the energized solenoid coil while, in Figure 6a, the normally extended plunger is pushed by an internal spring (of the solenoid, not shown) to catch ledge 118 knob 42 as will become apparent. The knob 42 and valve also effectively form a turn on switch for the controller since the first flow of water sensed by the impeller and reed switch will bring up the electrical circuits from standby.

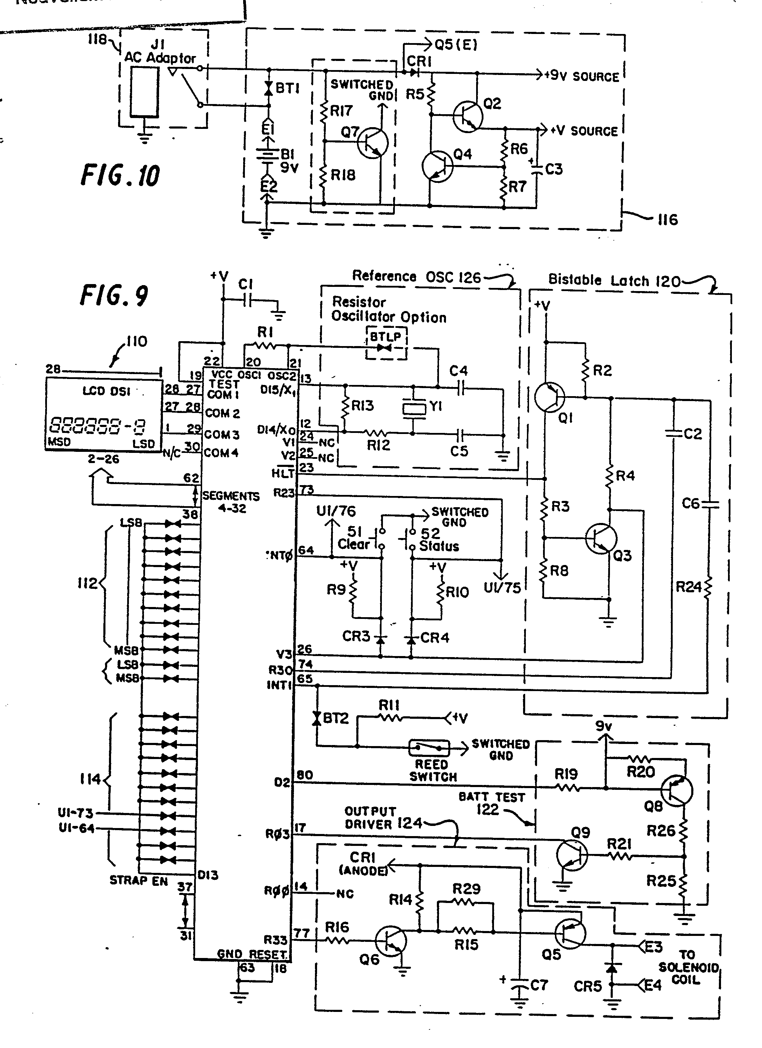

Referring now to Figures 9 and 10, the electronic circuitry uses a CMOS 4-bit microcomputer U1 including a 4-bit microprocessor ALC, a 4-bit bus and 4-bit registers. One preferable microcomputer is the model LCD-III HD449795 made by Hitachi. The LCD-III is a single chip microcomputer which contains ROM, RAM, I/O, Timer/Event Counter and Control Circuit, Direct Drive Circuit for LCD on single chip. The LCD-III is designed to drive LCD directly and perform efficient controller function as well as arithmetic function for both binary and BCD data. The CMOS technology of the LCD-III provides the flexibility of microcomputers for battery powered and applications in combination with low power consuming LCD. The microcomputer features include: 32 I/O lines and 2 external interrupt lines, timer/event pulse counter, built-in power-on reset circuit, low operating power dissipation, (2mW at 2.5 to 5.5 volts) and standby (halt) mode (50 microwatts maximum) at a instruction cycle time of about 20 microseconds.

The microcomputer is battery powered by a regulated power supply shown in of Figure 10 and is set up to accept a transistor ratio battery B1 (or optionally an AC adapter) that provides about 9 volts at several milliamperes. The unregulated voltage goes through diodes CR1 into a regulator that is made up of transistors Q2 and Q4 and resistors R5, R6 and R7 forming a a diode biased or diode controled regulator. The voltage across R7, which is roughly .6 or .7 volts, is the base emitter drop across Q4. The current passing through the base of Q4 is so much less than the current going through R7 plus the current induced voltage across R6 that the voltage that the microprocessor runs off of is simply the current through R7 which is .7 volts/150 K ohms. This provides a regulated supply of about 3.5 volts to pin 22 VCC of U1 for optimal stabilized display characteristics. CR1 provides for reverse battery protection against the user inadvertently connecting the battery up backwards.

Basically the microprocessor counts pulses from reed switch 60 closures seen at INTI, pin 65. The reed switch is operated by induction. As the magnetic field from the magnet which is in the impeller in the water vortex rotates, it aligns with the switch which provides a low reluctance patch for the magnetic field. The increased field closes the switch to provide a ground pulse to INTI.

The microprocessor accumulates these pulses and compares them with the filter capacity and the flow meter scaling information and it converts pulses to gallons or liters of flow.

Microcomputer U1 has an LCD display 160 and first and second sets of jumper pins or straps 162 and 164 forming a set of enable ports which calibrate the unit for maximum allowed capacity, according to the filter manufacturer's recommendations. The straps set the consumption for readings in gallons or liters and also sets the flow meter scaling.

External connections are provided from the microcomputer U1 to a bistable latch 170 for shifting between operate and standby modes, a battery test circuit 172, and a solenoid enable output driver 174 for operating the latch release to close valve 42. A crystal controlled reference oscillator 176 is optionally provided for greater accuracy of flow rate measurements.

The bistable latch provides a shift to low power consumption (halt) mode feature of this invention. When the user turns on water, the first pulse generated by the impeller movement (induction coupled by the reed switch) enables the microprocessor and starts the count and switches the latch 170 to normal power. More specifically, the reed switch is connected to both the microprocessor port INTI and to the bistable latch 170. Any switch closure corresponding to the magnet of impeller 52 spinning signifies water is flowing, and causes the bistable latch to make a transition to a state which wakes up the microprocessor which then counts pulses. If after 5 seconds of no additional activity at the reed switch which means that the water has been shut off, the micro sends a sleep command back to the bistable latch puts itself in the low power mode.

The latch has two stable states. If a small amount of base current is generated off of Q1, for instance, when the reed switch goes to a close position, momentary path will be through the base of Q1, C6, R24, that will cause some collector current to flow through Q1 through R3 turning on Q3. When Q3 turns on, it provides a permanent path for base current for Q1 and the latch turns into the ON state. Then when this latch is in the ON State, the voltage at R3 is essentially the regulated voltage out of the power supply which puts a logic high signal at the halt bar pin. That is the mechanism by which the micro comes out of the halt mode.

After 54 seconds of no activity, either the reed switch or either of the two buttons, clear or status, the microprocessor then brings port R30 from a low state to a high state. R30 moving from a low state to a high state is capacitively coupled back through C2 through the base of Q1. This temporarily stops the flow of base current through Q1 which stops the flow of collector current through Q1. When collector current through Q1 stops, Q3 shuts off. When Q3 shuts off, Q1 can no longer continue to run, so the latch then reverts to its other preferred position which is in the no current flow or off state. And when that happens, the voltage at the halt bar pin, pin 23, goes to logic 0 which brings the microprocessor into its sleep or low power standby consumption mode.

A battery low test circuit is provided and senses battery voltage. If the battery is low, it alerts the user that battery voltage is becoming marginal, and eventually initiates closure of valve 34 before the time that the battery depleted itself to such an extent that the circuit could malfunction without the user being aware. Periodically, every 16 times the unit comes out of standby mode, this circuit provides a control input to the battery load test circuit which connects a test load to the battery and a measurement is taken. If there is sufficient battery voltage to drive the solenoid, a BAT OK signal at pin 5 provided by the battery test circuit 122.

The battery low test circuit starts with a test in which port D2 is set from a high to a low state causing a base current to flow through Q8 which acts as a switch to connect the battery volage to a low test circuit consisting of R26 and R25 operating as a voltage divider.

Resistors R25, R26 have been scaled so that if there is sufficient voltage from the battery for the test, there will be enough voltage generated across R25 to turn Q9 on. Q9 then is able to pull port R03 (BAT OK) low, i.e., when the battery is in a good state the signal will be pulled low. If port B2 is activated, the battery test line senses a logic high at R03, that tellsthat there was not sufficient current through the voltage divider to turn Q9 on and therefore the battery has become marginal.

In the event that the battery voltage has become marginal the signal at BAT OK is not present. The mirocomputer is programmed to wait until the water shuts off and then returns the circuit power to standy (halt mode), allowing the battery to rest then the program enables the solenoid output driver 124 to fire solenoid to release the shut off valve latch and to put the words LO BATT on the display 44, and the user is so informed to change the battery.

Another feature allows the user to change batteries without losing the accumulated flow information. So for instance, the user has a certain number of gallons of accumulated flow, he can then change the battery, put a new battery in and the unit will remember that certain number gallons of flow have already been seen. This remembrance function is internal to the microprocessor and is kept powered even when the battery is removed. When the bias is removed from Q7, that forces the unit to stay in the halt mode since there is no way it can come out of the low power mode. However, the energy stored in capacitor C7 maintains sufficient voltage to the microprocessor for several minutes so that it remembers the accumulated flow while the user changes the battery.

The output driver 124 solves the problem of how to use the microprocessor shut-off signal at R33 to obtain a single with sufficient current to drive the solenoid to activate the solenoid. When port R33 is high, that drives the base of a Darlington high gain transistor Q6 which turns on which then provides a path of base current for the high current transistor Q5. When Q5 turns on, it directly connects the available power from the battery to the solenoid coil, i.e., Q5 serves as a switch to connect the full battery power available to the solenoid coil directly without regulation so that whatever power remains in the battery gets dumped on the coil.

CR5 is a transient suppressor. When an inductive load is driven from the on to the off position, it generates a larage voltage from the inductance of the coil. CR5 clamps that voltage to 0.7 volt and provides a current path so that the current in the coil can dissipate itself through CR5 to protect the solid state devices from the transient spikeswhich would otherwise occur.

In some applications it may be desirable to have a highly accurate flow rate measurement, i.e., a rate output in terms of gallons per minute or units per minute.

Although the calculations of total gallons of flow do not require a stable time base, a guarantee or accurate rate information does require a stable time base. If this is dgesired, a precision crystal Y1 may optionally be employed as a stable time base.

The status and clear buttons are sensed off of ports R23 and INTO and those switches are also coupled into the bistable latch through diodes CR3 and CR4 so that if the unit is in the sleep mode pressing either the status or the clear buttons brings the micro out of the sleep mode so it displays the status or other displays on the LCD 44.

The principal programming operations for implementing the invention on the LCD 11 microprocessor are set forth in Appendix I and includes mail loop (lines 743-777); process pulse (lines 799-889); sleep (standby) (lines 891-932); cutt off reached (lines 933-965); battery test (lines 1089-1105).

The following is a description of the main loop starting at 747. The first item is the test P flag. This flag is set in the interrupt routine statement 749. At that point it either sees a pulse or it didn't. If it does get a pulse, it branches to GOTPULS. GOTPULS is on line 782 and that is the code that would handle updating all registers and counters. If it didn't get a pulse, then it goes to 754 MBACK. At that point it checks the clear key and the status key. If there is a status request, then it checks to see if there is a timeout. Not only is there an input interrupt collecting input pulses, there is also a timer running asynchronously with that function so that a time base is generated every second. If there is no impeller pulse or if there is no key pressed in five seconds, then it is timeout and the program returns the controller to standby operation.

The status button is used primarily to change the controller display mode. The system is programmed to provide three different readings: a) consumption reading, b) capacity reading or c) flow rate reading. Normally, the LCD shows the total cumulative flowin gallons that have passed through the meter since last being cleared. The capacity reading results from pressing the status button to change the LCD reading from consumption reading to capacity reading to indicate the number of gallons at which the shut-off valve will be actuated. A small dot blinking in the upper left hand corner of the LCD indicates capacity reading. Another press of the status button will change the LCD reading from capacity reading to flow rate reading to indicate the current flow rate at which water is moving through the controller. The flow rate reading is indicated by a small dot blinking in the upper right hand corner of the LCD. Pressing the status button again will return the LCD to consumption reading.

The clear button is used to zero out the consumption readingupon filter cartridge replacement. The clear button is designed as a guarded switch requirng the use of a ball point pen or other pointed device to prevent accidental clearance. When the automatic shut off hasbeen actuated, the on-off know will switch from the on position to the off position. Once proper cartridge replacement is made in the water filter, the user can resume normal operation by rotating the on-off knob to the on position and depressing the clear button with the aid of a ball point pen.

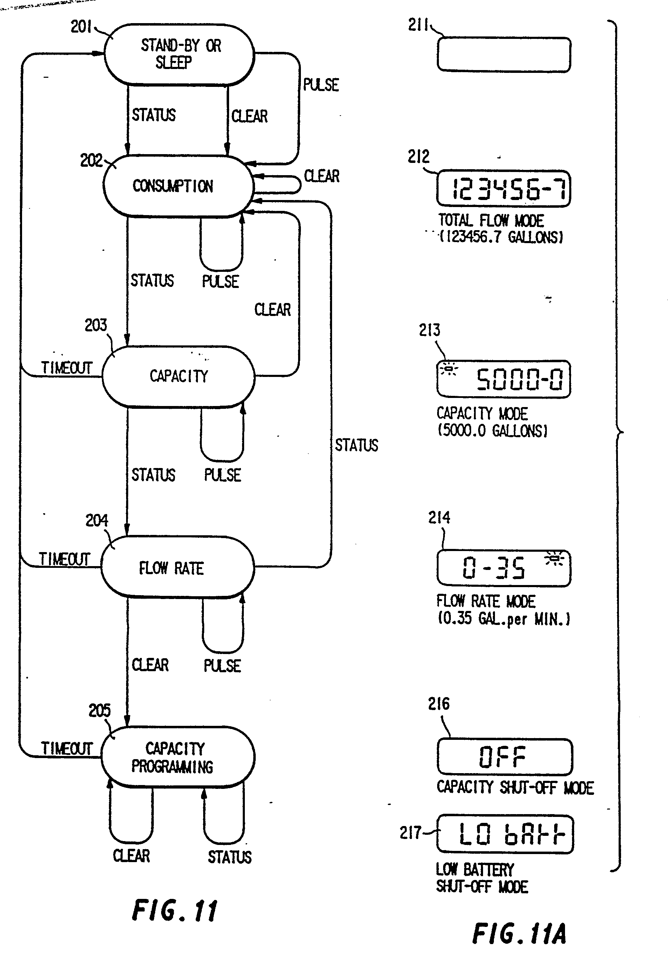

Figure 11 illustrates the user display selection scsheme resulting from pushing the status or clear buttons while in any specific one of modes 201-205. The resulting displays are shown in associated Figure 11a as 211-214. Displays 216 and 217 show the battery condition status.

In summary, three things will turn on the unit and take it out of sleep mode, the status button, the clear button or pulse come in from the impeller. KThese turn on the consumption display. The consumption display shows how many gallons have been consumed. A status button request from that display will bring up the capacity display, a pulse will keep the consumption display mode and if that pulse overflows, a set number of pulses per tenth of a gallon, for example, it would increment the display driver and show the updated consumption.

A clear button will zero out the consumption display and restart the display with zeros. The clear button will maintain the consumption display.

After insertion of a fresh battery, the user first zeros out the cumulative flow meter memory by pressing the clear button which clears all memory in the microprocessor. The clear button also has functions related to the manufacturing self-test for the electronics assembly. These functions are not user accessible, and are not described in this document due to the fact that execution of the self test mode without placement of the circuit board assembly into a manufacturing test fixture could cause damage to the solenoid driver circuitry. The purpose of the self test routine is to simplify the manufacturing test procedures used during the electronic assembly.

The controller button is used primarily to change the flowmeter's display mode. The consumption mode is the primary display mode, and is automatically selected by the microprocessor unless the user selects another display mode by use of the status button. In this display mode, the LCD will show the total cumulative flow, in gallons, which has passed through the flow meter since the device was zeroed out by use of the clear key.

As mentioned earlier, the mciroprocessor automatically moves to standby power when the flow of water stops. During this power down mode, the total flowvalue is retained in the microprocessor memory. Interruption of the flow meter's power supply by removal of the battery or optional AC adaptor plug for more than a few minutes will cause the loss of total flowmemory.

In the capacity display mode, the LCD indicates the value of total flow at which the shut-off valvve will be actuated. The flow capacity is a manufacturing strap option. The capacity display mode is indicated to the user by a blinking bar in the upper left hand corner of the liquid crystal display during this display mode.

In the flow rate display mode, the LCD indicates the current flow rate at which water is moving through the controller. This flow rate is calculated from the number of pulses from the impeller which have occurred in the last one second interval. The flow rate is updated at one second intervals. The displayed value is measured in gallons per minute. The flow rate display mode is indicated by a blinking bar in the upper right hand corner of the display during display time.

As described previously, when no water flow is detected, the flowmeter will be in a low power standby mode; in this mode, there will be nothing displayed on the LCD as at 211 (Fig. 11a). Upon sensing water flow, the controller will automatically power itself up and begin operation in the consumption display mode at 212. It will remain in this mode until five seconds after water flow stops. Once powered down again in stand-by mode, the user may, at any time, press the status button to display the current consumption value. Again the flowmeter will remain in consumption display mode until five seconds after the user has released the status button. As described, the controller will always be in the consumption display mode unless another mode is manually selected by the user.

The user can manually select the alternate flow rate and capacity display modes through multiple presses of the status button. While in the total flow display mode, one press of the status button will put the controller into the capacity display mode. Another touch of the button will put the device into the flow rate display mode. At this point, the controller can be returned to the consumption display mode by pressing status again. In other words, the device will continually cycle through the three display modes with successive presses of the status key.

The operating modes for the controller differ somewhat after the automatic shut-off has been actuated. Following shut-off, there will be no automatic turn on. This is because no water can flow through the impeller to allow the device to turn on once the valve has closed. Manual turn on by use of the status key will result in the word "OFF" shown on the display. This display condition will remain for approximately five seconds following release of the status button. While in this condition, the user can resume normal flow meter operation by rotating the valve knob to the open position, and depressing the clear button with the aid of a ball point pen.

The shut-off capacity of the controller is also programmable in the manufacturing process by modification of printed circuit board strap options. The capacity strap option may be overridden by a special key sequence. Unprogrammed printed circuit board assemblies are configured for a particular shut-off capacity by cutting printed circuit board traces in a particular pattern for the desired shut-off valve. Because this is a labor intensive process, it is assumed that high volume production quantities for a given shut-off capacity would be implemented by minor changes in the printed circuit board layout, rather than the manual process of cutting circuit board traces. Once programmed for a given shut-off capacity by strap option, a flow meter assembly can be re-programmed for a different shut-off capacity through a special status/clear key sequence. Entry into the program mode is accomplished by pressing the clear key while flow rate is being displayed. All zeros will be displayed with the least significant digit flashing. At this point, pressing the status key will cause the flashing digit to be incremented. Pressing the clear key will cause the next more significant digit to flash. Exit from the program sequence is accomplished by allowing the unit to timeout (no keys pressed).

The shut-off capacity is programmed by specifying a number having a decimal value from 0 to 999 and a decimal multiplier in the range of 0.1 to 100. Please refer to the following table to understand the shut-off capacity programming method. Eight strappable inputs are provided to program the binary number having a corresponding decimal value between 1 and 999. Three additional strapping inputs are provided to program the appropriate multiplier.

Among the many features and advantages of the present invention, the magnetic ciruit of the impeller and induction reed switch are to be noted. By placing the magnet at the center of the impeller in a circular disk, rather than at the ends of the blades, as in the prior art, the impeller is inherently balanced and has greatly reduced moment of inertia. This design completely seals the magnet form moisture which was difficult to do in the prior art designs. The magnetic circuit is vastly improved since the low reluctance path of the reed switch lies across the magnet in a spaced parallel plane so that the circuit is completed with the reed switch from the north pole to the south pole of the magnet, with a minimum of air gap.

Advantages that were obtained, aside from the balancing and reduction of cost, were improved accuracy of the system. The prior device did not act completely linear and adjustments to the circuit were necessary to compensate for various flow rates. The present invention, with the magnet in the center, does have a substantially linear response. Additionally, it was also found that the new configuration was more sensitive, permitting lower flow rates to be sensed by the system.

Another element that is to be noted is the use of the spring loaded on/off valve. A difficulty was encountered in past designs in having a reliable on/off valve, one that could be activated by a very small power supply. The present approach using the main on/off switch on the front as a loading device to load a spring to place it under torsion is very effective since all that is necessary to activate the valve is a small current to release the spring.

## Claims

1. Apparatus for the measurement and control of the volume of liquid passing through a conduit, consisting of flow monitoring apparatus connected to logic circuitry, and valve means controlled by said logic circuitry to close the conduit when a preset volume of liquid, as measured by the flow monitoring apparatus, has passed through it.

2. Apparatus as in claim 1 in which said valve means comprise a valve having open and shut settings, a bias mechanism for urging the valve into the shut setting, a solenoid latch for holding the valve in the open setting, the solenoid latch being responsive to signals from the logic circuitry to open the latch.

3. Apparatus as in claim 1 or 2 in which said valve is of a rotary type operated by the rotation of a shaft and said bias mechanism is a coil spring encircling the shaft and coupled between the shaft and a detent formed in the housing of said apparatus whereby rotation of the shaft to the open position puts the spring in torsion.

4. Apparatus as in any of the preceding claims which is powered by a battery, having circuits contained within the logic circuitry to monitor the voltage from the battery, being set to close the conduit when the voltage falls to a given level.

5. Apparatus as in any of the preceding claims in which the logic circuitry includes a liquid crystal display and display driver circuitry with means for programming the said circuitry to display information related to the measured flow of liquid and the condition of the voltage supply.

6. Apparatus as in any of the preceding claims in which the logic circuitry contains facilities for measuring elapsed time and switching to a standby state, after a given period of no liquid flowing in the conduit, such that power consumption is reduced.

7. Apparatus as in claim 5 in which the logic circuitry contains facilities for measuring elapsed time and switching to a standby state wherein the display circuitry is inactive during the standby state.

8. An impeller assembly for use in a fluid monitoring system, having an impeller situated within an impeller chamber, the impeller having a central hub which lies substantially concentrically within the chamber, and which contains permanent magnet material mounted axially such that the magnetic flux produced operates a reed-switch mounted in close proximity to the hub, outside the impeller chamber.

9. An impeller assembly as in claim 8 in which the impeller rests unsupported within the impeller chamber with clearances between the impeller and the internal surfaces of the chamber.

10. An impeller assembly as in claims 8 or 9 wherein capping means seal the said magnetic material into the impeller against the ingress of liquid from said impeller chamber.

11. Apparatus as in any of claims 1 to 7 wherein the flow monitoring apparatus comprises an impeller assembly as in any of claims 8 to 10, said reed switch being connected to the logic circuitry and providing a series of electrical pulses to the logic circuitry when liquid is flowing in the conduit by which the rate of flow of the liquid is derived.

Neu eingereicht / Newly filed
Nouvellement déposé

FIG.1

FIG.2

FIG.2a

FIG.3

BAD ORIGINAL

Neu eingereicht / Newly filed
Nouvellement déposé

0 267 701

FIG. 4

FIG. 5

BAD ORIGINAL

Neu eingereicht / Newly filed
Nouvellement déposé

**FIG. 6**

**FIG. 6a**

**FIG. 7**

**FIG. 8**

BAD ORIGINAL

Neu eingereicht / Newly filed
Nouvellement déposé

FIG.10

FIG.9

BAD ORIGINAL

Neu eingereicht / Newly filed
Nouvellement déposé

201 STAND-BY OR SLEEP

PULSE

STATUS | CLEAR

CLEAR

202 CONSUMPTION

CLEAR

STATUS | PULSE

CLEAR

203 CAPACITY

TIMEOUT

STATUS | PULSE

STATUS

204 FLOW RATE

TIMEOUT

CLEAR | PULSE

205 CAPACITY PROGRAMMING

TIMEOUT

CLEAR | STATUS

**FIG. 11**

211

212

```
123456-7
```
TOTAL FLOW MODE
(123456.7 GALLONS)

213

```
5000-0
```
CAPACITY MODE
(5000.0 GALLONS)

214

```
0-35
```
FLOW RATE MODE
(0.35 GAL. per MIN.)

216

```
OFF
```
CAPACITY SHUT-OFF MODE

217

```
LO bAtt
```
LOW BATTERY
SHUT-OFF MODE

**FIG. 11A**

BAD ORIGINAL

| | DOCUMENTS CONSIDERED TO BE RELEVANT | | EP 87309222.5 | |
|---|---|---|---|---|
| Category | Citation of document with indication, where appropriate, of relevant passages | Relevant to claim | CLASSIFICATION OF THE APPLICATION (Int. Cl.4) | |
| A | CH - A - 555 536 (FRIEDRICH GROHE) <br> * Fig. 1; column 3, lines 14-34 * <br><br> -- | 1,2 | G 01 F 1/00 <br> G 01 F 13/00 | |
| A | FR - A1 - 2 428 827 (OFFICINA) <br> * Page 2, line 36 - page 4; fig. * <br><br> -- | 1,2 | | |
| A | US - A - 4 308 755 (MILLAR et al.) <br> * Fig. 3,5; column 6, lines 32-57 * <br><br> -- | 4,5,8, 11 | | |
| A | EP - A1 - 0 147 004 (GREAT PLAINS) <br> * Fig. 2; page 9, lines 7-22 * <br><br> -- | 5-7 | TECHNICAL FIELDS SEARCHED (Int. Cl.4) | |
| A | US - A - 3 709 037 (ABBOTTS) <br> * Fig. 4; abstract * <br><br> ---- | 8,9 | G 01 F 1/00 <br> G 01 F 13/00 | |

The present search report has been drawn up for all claims

| Place of search <br> VIENNA | Date of completion of the search <br> 11-12-1987 | Examiner <br> BURGHARDT |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82